# EUROPEAN PATENT APPLICATION

(11) **EP 1 410 965 A1**
(43) Date of publication of application: **21.04.2004**
(21) Application number: 02732776.6
(22) Date of filing: 27.05.2002
(51) Int. Cl.: B60S 1/48, F04D 29/08

(54) **ELECTRICALLY-DRIVEN PUMP FOR MOTOR VEHICLE WINDSCREEN WASHERS**

(30) Priority: 03.07.2001 ES 200101699 U
(71) Applicant: FICO TRANSPAR, S.A., Barcelona 08028 (ES)
(72) Inventor: MOTA LOPEZ, Miguel, E-08191 Rubi (ES); ELVIRA PERALTA, Juan José, E-08191 Rubi (ES)
(74) Representative: SUGRANES - VERDONCES - FERREGÜELA
(86) International application number: PCT/ES2002/000248
(87) International publication number: WO 2003/004325

(57) **Abstract**

Electric pump for motor vehicle windscreen washers of the type comprising a suction-impelling pump and a driving electric motor, arranged vertically and axially to each other inside an essentially cylindrical casing (1) provided with a likewise essentially cylindrical cover (2). The casing (1) and the cover (2) are provided with watertight means (11), made up of respective perimeter groove (12, 13) of transversal curved-concave cross-section, arranged in such a way that the coupling of the cover (2) with the casing (1) defines a slot adapted for housing, by means of tightening, a flexible and elastic annular watertight seal (14).

## Description

### Technical sector of the invention

The object of the invention is an electric pump for windscreen washers in motor vehicles.

### Background to the invention

A wide variety of electric pumps for motor vehicle windscreen washers is known which, in the main, are made up of a casing, in which an electric motor fed by the vehicle's electrical supply, and a suction-impelling pump, are housed. The electric pump can be coupled to a cleaning liquid deposit, generally arranged in the engine compartment by means of an axial suction extension provided in the casing, the electric pump being arranged in an exposed manner, vertically and adjacent to the deposit.

The arrangement of the electric pump described earlier does not present functional drawbacks in vehicles designed for road driving in any weather conditions. However, said arrangement does present drawbacks in motor vehicles adapted for driving on any kind of terrain and for traversing water crossings. When these jeep-type vehicles traverse water crossings water enters the engine compartment, even flooding it on some occasions. Under these conditions, the known embodiments of electric pumps are subject to malfunctions and/or breakdowns as a result of water and solids getting into the engine compartment.

### Explanation of the invention

The electric pump for motor vehicle windscreen washers object of the invention is of the type comprising a suction-impelling pump and a driving electric motor, arranged vertically and axially to each other inside an essentially cylindrical casing, to which a likewise essentially cylindrical cover can be outwardly coupled, through respective and complementary coupling means.

The electric pump according to the invention is characterised in that the casing and the cover are provided with respective and complementary watertight means, arranged below the coupling means and intended for preventing the intake of liquids and solids proceeding from the outside into the casing interior.

According to another feature of the electric pump object of the invention, the watertight means, in both the casing and the cover, comprise a respective perimeter groove of transversal curved-concave cross-section, defining, once the cover is coupled to the casing, a slot adapted for housing between the cover and the casing, by means of tightening, a flexible and elastic annular watertight seal.

### Brief description of the drawings

In the attached drawings a form of embodiment of the electric pump for motor vehicle windscreen washers according to the invention is illustrated by way of non-limiting example. In said drawings:
Fig. 1 is an elevation view of the electric pump according to the invention; and
Fig. 2 is a detailed, cross-section enlarged view of the electric pump watertight means.

### Detailed description of the drawings

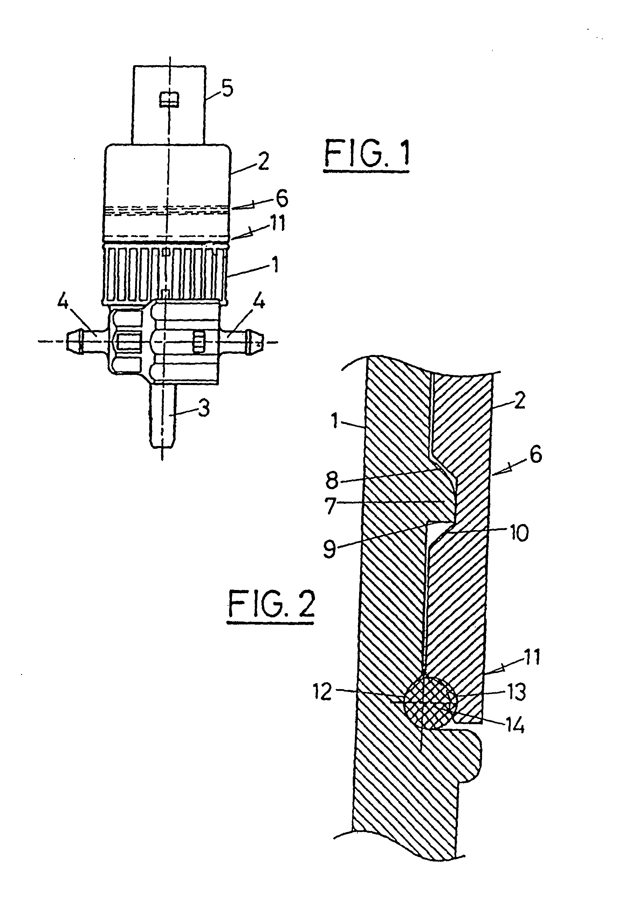

In Fig. 1 the electric pump for motor vehicle windscreen washers object of the invention is represented, which as an embodiment example is described. The electric pump comprises a casing 1 to which a casing 2 can be outwardly coupled, the casing being adapted for housing an electric motor and an axially coupled suction-impelling pump, not shown.

The casing 1 has an essentially cylindrical shape and at its lower end is provided with a suction tubular extension 3 and two axially arranged nozzles 4. The suction tubular extension 3 is adapted for being arranged inside a cleaning liquid deposit, not shown, whereas the nozzles 4 are adapted for the coupling of the respective flexible conduits, which drive the liquid impelled by the pump towards the consumption points, such as the front windscreen, the vehicle rear window and the headlights.

The cover 2 has an essentially hollow cylindrical shape, open at its lower end, its upper end having a prismatic extension 5 adapted for receiving an electrical feed connection terminal from the electric motor.

The coupling of the cover 2 to the casing 1 is carried out by means of respective and complimentary coupling means 6, represented in Fig. 1 by dashed lines and in Fig. 2 by an enlarged detail of a longitudinal cross-section of the casing 1 and the cover 2 when coupled. Said coupling means comprise in casing 1, a perimeter projection 7, with a profile in which a first curved-convex portion is distinguished and which links with a second portion 9, perpendicular to the casing, whereas in cover 2 they comprise a perimeter groove 10, with a trapezoidal profile adapted for housing the perimeter projection 7. It is understood that the coupling means described are only given by way of example and can adopt any other suitable configuration.

The casing 1 and the cover 2 are provided with respective and complimentary watertight means 11 arranged below the coupling means 6, as is detailed by means of dashed lines in Fig. 1 and in the enlarged detail in Fig. 2.

In Fig. 2 it can be appreciated that the watertight means 11 comprise a perimeter groove 12 with a circumferential profile in casing 1, whereas at the lower end of cover 2 they comprise a perimeter groove 13, likewise with a circumferential profile, complementary to the casing groove, and both grooves being adapted in such a way that the coupling of the cover 2 to the casing 1 forms an essentially toroidal slot where a flexible and elastic watertight seal 14 is housed by means of tightening.

## Claims

1. Electric pump for motor vehicle windscreen washers of the type comprising a suction-impelling pump and a driving electric motor, arranged vertically and axially to each other inside an essentially cylindrical casing (1), to which a likewise essentially cylindrical cover (2) can be outwardly coupled, through respective and complementary coupling means (6), which is **characterised in that** the casing and the cover are provided with complementary and respective watertight means (11), arranged below the coupling means and intended for preventing the intake of liquids and solids proceeding from the outside into the casing interior.

2. Electric pump for motor vehicle windscreen washers according to claim 1, which is **characterised in that** the watertight means comprise in the casing (1) and in the cover (2) a respective perimeter groove (12, 13) of transversal curved-concave cross-section, arranged in such a way that the coupling of the cover with the casing defines a slot adapted for housing, by means of tightening, a flexible and elastic annular watertight seal (14).
